# NEUE EUROPÄISCHE PATENTSCHRIFT

(11) **EP 1 302 755 B2**
(45) Veröffentlichungstag und Bekanntmachung des Hinweises auf die Entscheidung über den Einspruch: **10.07.2013**
(45) Hinweis auf die Patenterteilung: 14.03.2007
(21) Anmeldenummer: 01810997.5
(22) Anmeldetag: 12.10.2001
(51) Int. Cl.: G01D 18/00, G01D 3/02

(54) **Sensor**
Sensor
Capteur

(43) Veröffentlichungstag der Anmeldung: 16.04.2003
(73) Patentinhaber: Kistler Holding AG, 8408 Winterthur (CH)
(72) Erfinder: Schmid, Edwin, 8447 Dachsen (CH); Wolfer, Peter, 8451 Kleinandelfingen (CH)

(56) Entgegenhaltungen:
- WO-A1-97/06766
- DE-A- 3 733 747
- DE-A- 4 035 403
- GB-A- 2 284 059
- US-A- 5 792 951
- US-A- 5 929 333
- PATENT ABSTRACTS OF JAPAN vol. 018, no. 574 (P-1821), 2. November 1994 (1994-11-02) & JP 06 213755 A (MITSUBISHI MOTORS CORP;OTHERS: 01), 5. August 1994 (1994-08-05)

## Beschreibung

Die Erfindung bezieht sich auf einen Sensor nach dem Oberbegriff des unabhängigen Anspruchs 1 sowie auf einen Verbrennungsmotor mit einem derartigen Drucksensor.

Sensoren zum Messen von Druck, Kraft, Beschleunigung, Temperatur werden in der Messtechnik vielfältig angewendet und eingesetzt. Diese Sensoren haben oft eine eigene Identität, d.h. die Sensoren selbst des gleichen Typs und der gleichen Bauart haben verschiede Empfindlichkeit oder andere Eigenschaften. Solange nur ein einzelner Sensor eines Typs in einer Messanordnung verwendet wird, lässt sich das individuelle Einstellen des Auswertegeräts auf den individuellen Sensor noch gut und zuverlässig handhaben.

Schwieriger wird es Verwechslungen zu verhindern, wenn eine Vielzahl von Sensoren gleicher Baugrösse zu handhaben sind oder wenn den Sensoren von im eingebauten Zustand gerade noch der Anschlusstecker zugänglich bleibt, wie dies z.B. bei Verbrennungsmotoren, Gas- oder Dampfturbinen, bei Spritzgussmaschinen, Spritzgusswerkzeugen, Extrusionsmaschinen, Stanzmaschinen, Crashwänden, u.s.w. oder sonst bei der Messung von Kräften, Drücken und/oder Beschleunigungen der Fall sein kann. Da wird es wichtig, dass die dem Sensor eigenen, individuellen Daten möglichst nicht verwechselbar sind. Das Datenblatt, in welcher Form auch immer, sollte fest und unverwechselbar zugeordnet sein.

So ist es heute bekannt einem Sensor, z.B. einem piezoelektrischen Sensor wie einem Beschleunigungssensor, Drucksensor oder Kraftsensor das Datenblatt in der Form eines elektronischen Datenträgers zuzuordnen. So werden etwa Daten wie Empfindlichkeit, Datum der Eichung, Sensortyp, Serienummer, die Person, welche die Eichung durchgeführt hat usw. auf dem elektronischen Datenträger wie z.B. einem EPROM gespeichert. Darüber hinaus ist es auch möglich, auf dem Datenträger gleich die Einstellparameter für das Auswertegerät, welchem die Messdaten des Sensors zur Auswertung zugeführt werden zu speichern. Mit diesen Daten vom Datenträger stellt der Sensor das Auswertegerät gleich selbst ein.

Aus der US 5792951 ist ein selbstkalibrierendes Messsystem bekannt, das eine Speichereinheit ausserhalb des Sensors, im Kabel oder im Steckerbereich aufweist. Diese Speichereinheit dient dem Speichern der Kalibrierdaten bei jeder Selbstkalibrierung. Diese Einrichtung ermöglicht allerdings keine unverwechselbare Erkennung des Sensors.

Aus der DE 4035403 A1 ist ein Sensorsystem zur berührungslosen Abstandsmessung bekannt, das mittels eines Kennungswiederstandes erkennen kann, ob die mit einem Koaxialkabel entstandene Verbindung zu einem Steuersystem unterbrochen ist oder nicht.

Die DE 3733747A1 beschreibt ein mehradriges Koaxialkabel mit Abschirmung.

Um die hohe geforderte Sicherheit bei der Auswertung von Messdaten zu erreichen ist es natürlich auch bei diesen elektronischen Datenträgern erforderlich, Messsensor und Datenträger einander eindeutig zuzuordnen, was beispielsweise erreicht werden kann, indem der Datenträger im Gehäuse des Sensors integriert, d.h. eingebaut ist.

Beispielsweise beim Verwenden von Sensoren wie piezoelektrischen Drucksensoren in einer Umgebung hoher Temperaturen sind Sensoren mit im Sensorgehäuse eingebautem Datenträger nicht mehr tauglich. Elektronische Datenspeicher wie EPROMS sind bei Temperaturen von über 150°C bis 200°C nicht mehr funktionstüchtig und werden zerstört.

Der Datenträger muss also vom eigentlichen Sensor weg, ausserhalb des Hochtemperaturbereichs und mit dem Sensor möglichst untrennbar verbunden montiert werden.

Bei piezoelektrischen Sensoren wie Drucksensoren erfolgt die Übertragung der Messsignale hochohmig. Die Daten von Datenträgern werden in der Regel niederohmig übertragen. Das Übertragen der Messdaten und der Daten des Datenträgers hat demnach mit Vorteil über getrennte Leiter zu erfolgen. Dies führt zu Verbindungskabeln, welche es nicht erlauben, mit vertretbarem Aufwand beliebig zu miniaturisieren. Zusätzliche Schwierigkeiten ergeben sich, wenn nun noch der Datenträger ausserhalb des Sensorgehäuses möglichst untrennbar angeordnet werden soll.

Aufgabe der Erfindung ist es, einen in dieser Hinsicht verbesserten Sensor zu schaffen. Das Konstruktionsprinzip soll es erlauben, Messsignale und Datensignale vom Datenträger mit einer Verbindung zum Auswertegerät zu übertragen und ein erhebliches Miniaturisieren zu erlauben.

Erfindungsgemäss wird diese Aufgabe mit einem Sensor gelöst, welcher die Merkmale des unabhängigen Anspruchs 1 aufweist. Der Motor nach der Erfindung ist mit mindestens einen derartigen Sensor bestückt. Die abhängigen Ansprüche beziehen sich auf vorteilhafte Ausführungsformen der Erfindung.

Durch die besondere Art der Führung der mit dem Sensor erzeugten Messsignale und der Datensignale zu den Pins oder Ösen im Stecker des Sensors, wird es möglich, Verbindungsleitung und Stecker des Sensors in miniaturisierter Bauweise auszuführen. Wenn es nicht möglich ist den Datenträger im Sensor mit einzubauen, z.B. weil der Sensor in einem Hochtemperaturbereich eingesetzt wird, kann der Datenträger im Bereich des Steckers eingebaut werden, ohne dass deswegen ein Stecker mit grösseren Abmessungen gewählt werden muss. Dies wiederum erlaubt es, bei der Montage der Sensoren die üblichen Montagewerkzeuge wie Steckschlüssel zu verwenden, indem bei der Montage Stecker und Kabel des Sensors durch den Steckschlüssel geführt werden können.

Die Erfindung wird nachstehend anhand der schematischen Zeichnungen welche Ausführungsformen der Erfindung und Teile davon zeigen, näher erläutert.

Es zeigen:
- Fig. 1: ein Schaltschema für einen Sensor mit Datenträger nach der Erfindung;
- Fig. 2: schematisch den Sensor mit Datenträger und Verbindung mit einem Koaxialkabel vom Sensor zu einem Stecker und mit einem Triaxialkabel von diesem Stecker zum Auswertegerät.
- Fig. 3: die Anordnung von Sensor, Koaxialkabel, Stecker und Triaxialkabel zum Auswertegerät von Fig. 2 in einer schematischen Aussenansicht;
- Fig. 4: schematisch den Aufbau des Triaxialkabels.

Vom Sensor 11 der Schaltung 1 führen die Masseleitung 12 und die Messsignalleitung 13 zum Stecker 14. Auf dem Datenträger 10, z.B. einem EEPROM Chip, sind die für den Sensor 11 spezifischen Daten gespeichert. Der Datenträger 10 hat den Masseleiter 12 mit dem Sensor 11 gemeinsam. Die Datenleitung 15 vom Datenträger 10 führt ebenfalls zum Stecker 14. Die Leitungen 12 und 13 können Leiter und Abschirmung eines Koaxialkabels sein.

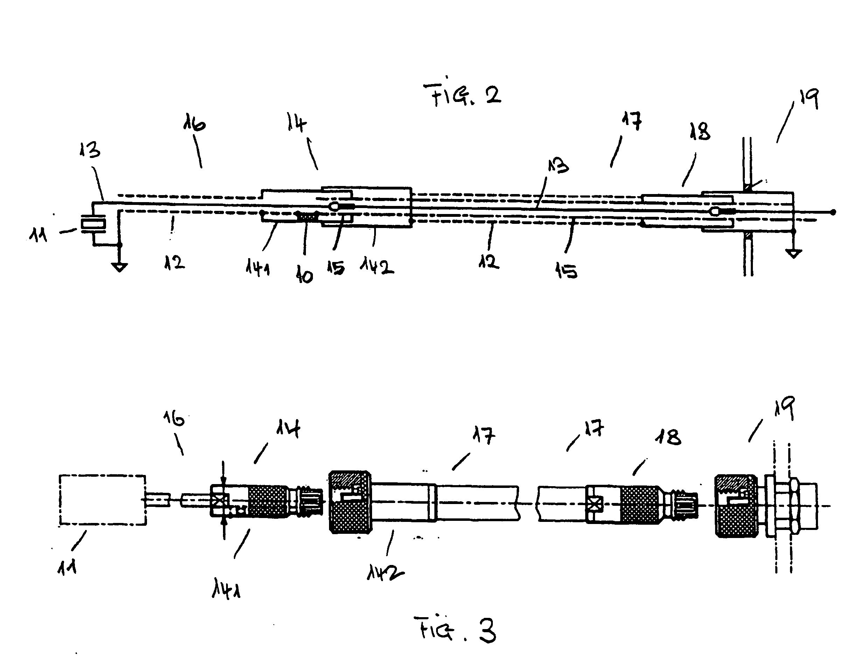

In der Anordnung von Fig. 2 und Fig. 3 ist wiederum die Messsignalleitung 13 und die Masseleitung 12 z.B. über ein Koaxialkabel 16 mit Abschirmung zu den Pins oder Kontakten des Steckers 14 geführt. Im Teil 141 des Steckers 14 ist der Datenträger 10 angeordnet. Der Teil 141 des Steckergehäuses ist leitend und mit dem Masseleiter 12 leitend verbunden. Vom ersten Stecker 14 mit dem triaxialen Ausgang werden die Messsignale und die Datensignale z.B. mit einem triaxialen Kabel 17 zu einem weiteren Stecker 18 geführt, der im gezeigten Beispiel mit dem Eingang des Auswertegeräts 19 verbunden ist.

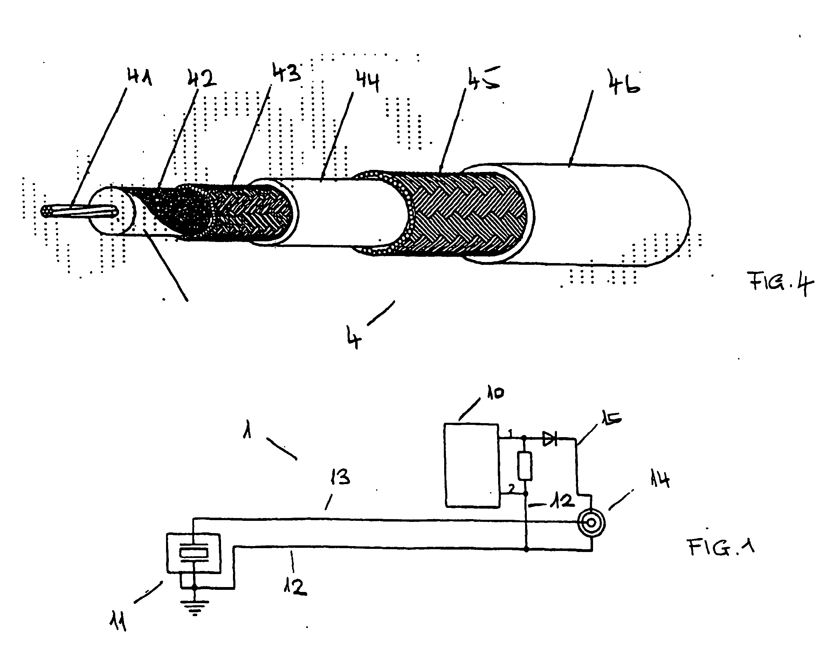

Schliesslich zeigt Fig. 4 den Aufbau eines Triaxialkabels 4 mit einem Leiter 41, einer ersten Isolationsschicht 42, einer ersten Abschirmung 43, einer zweiten Isolationsschicht 44, einer zweiten Abschirmung 45 und der äusseren, dritten Isolationsschicht 46.

Zum Sensor gehört ein Datenträger auf welchem die spezifischen Daten des Sensors wie Typ, Messbereich, Eichdatum, Serienummer, Hersteller, u.s.w. gespeichert sind. Die Daten können direkt vom Datenträger zum Auswertegerät zum Einstellen des Auswertegeräts übertragen werden. Messsignale vom Sensor und Datensignale vom Datenträger werden über einen Stecker zu einem Auswertegerät übertragen. Der Datenträger ist ausserhalb des Sensors in der Verbindung zum Stecker, bzw. im Steckergehäuse angeordnet und damit mit dem Sensor fest verbunden. Der Sensor, z.B. ein Piezo-Sensor zum Bestimmen von Drücken, Beschleunigungen oder Kräften, ist damit für den Einsatz in einem Bereich mit erhöhten Temperaturen geeignet.

## Patentansprüche

1. Sensorgehäuse umfassender Sensor (11) mit zugehörigem elektronischen Datenträger (10) und Verbindung (16, 17) zum Übertragen von Messsignalen auf Messleitungen (12, 13) vom Sensor (11) und von Datensignalen auf Datenleitungen (12, 15) vom Datenträger (10) über einen Stecker (14) zu einem Auswertegerät (19), wobei der Datenträger (10) ausserhalb des Sensors (11) im Stecker (14) in der Verbindung (16) angeordnet ist, welcher mit dem Sensor (11) fest verbunden ist, **dadurch gekennzeichnet, dass** die Verbindung (16) zwischen Sensor (11) und Stecker (14) ein koaxiales Kabel und zwischen Stecker (14) und Auswertegerät (19) ein triaxiales Kabel ist, wobei die Messleitungen (12, 13) vom Sensor (11) und die Datenleitungen (12, 15) vom Datenträger (10) einen gemeinsamen Masseleiter (12) haben.

2. Sensor nach Anspruch 1, bei welchem das triaxiale Kabel (17, 4) ein Leiter (13, 41) und zwei Abschirmungen (15, 43, 12, 45) ist und zwischen Leiter (13, 41) und Abschirmungen (15, 43, 12, 45) Isolationen (42, 44) vorhanden sind.

3. Sensor nach einem der Ansprüche 1 oder 2, bei welchem der grösste Durchmesser des Steckers (14) und des Koaxialkabels (16) höchstens gleich oder kleiner als der Durchmesser des Sensorgehäuses (11) in seinem Montagebereich ist.

4. Sensor nach Anspruch 1 bis 3, bei welchem der Durchmesser des Sensorgehäuses (11) in seinem Monatagebereich höchstens 10 mm, vorzugsweise höchstens 5 mm oder 6 mm ist.

5. Sensor nach einem der Ansprüche 1 bis 4, **dadurch gekennzeichnet, dass** der Sensor ein Drucksensor, Kraftsensor, Beschleunigungssensor oder Temperatursensor ist.

6. Sensor nach einem der Ansprüche 1 bis 5, bei welchem im Datenträger (10) spezifische Daten des zugehörigen Sensors (11) wie Hersteller, Messbereich, und/oder Eichdatum abrufbar gespeichert sind.

7. Verbrennungsmotor mit Sensor (11) nach einem der Ansprüche 1 bis 5 zum Bestimmen von Zylinderdrücken.

8. Verbrennungsmotor,1 Gasturbine, Dampfturbine, Spritzgussmaschine, Spritzgusswerkzeug, Extrusionsmaschine, Stanzmaschine oder Crashwand mit einem Sensor (11) zum Messen von Kräften, Drücken oder Beschleunigungen nach einem der Ansprüche 1 bis 5.

## Claims

1. A sensor (11), comprising a sensor housing, and an associated electronic storage medium (10) and a connection (16, 17) for the transmission of measurement signals on measurement lines (12, 13) from the sensor (11) and of data signals on data lines (12, 15) from the storage medium (10) via a connector (14) to an evaluation device (19) wherein the storage medium (10) is arranged externally to the sensor (11) in the connector (14) in the connection (16) which is firmly connected to the sensor (11) **characterized in that** the connection (16) between sensor (11) and connector (14) is a coaxial cable and between connector (14) and evaluation device is (19) a triaxial cable wherein the measurement lines (12, 13) from the sensor (11) and the data lines (12, 15) from the storage medium (10) have a common earth conductor (12).

2. A sensor according to claim 1 wherein the triaxial cable (17, 4) is a conductor (13, 41) and two shields (15, 43, 12, 45) and wherein insulations (42, 44) are present between conductor (13, 41) and shields (15, 43, 12, 45).

3. A sensor according to any of the claims 1 or 2 wherein the largest diameter of the connector (14) and of the coaxial cable (16) is at most equal to or smaller than the diameter of the sensor housing (11) in the mounting area thereof.

4. A sensor according to claim 1 to 3 wherein the diameter of the sensor housing (11) in the mounting area thereof is at most 10 mm, preferably at most 5 mm or 6 mm.

5. A sensor according to any of the claims 1 to 4 **characterized in that** said sensor is a pressure sensor, force sensor, acceleration sensor or temperature sensor.

6. A sensor according to any of the claims 1 to 5 wherein in the storage medium (10) specific data of the associated sensor (11) such as manufacturer, measurement range and/or calibration date are stored in a retrievable manner.

7. A combustion engine having a sensor (11) according to any of the claims 1 to 5 for the determination of cylinder pressures.

8. A combustion engine, gas turbine, steam turbine, injection moulding machine, injection moulding tool, extrusion machine, punching machine or crash wall having a sensor (11) for measuring forces, pressures or accelerations according to any of the claims 1 to 5.

## Revendications

1. Capteur (11), comprenant un boîte de capteur, avec support de données électronique (10) spécifique et liaison (16, 17) pour la transmission de signaux de mesure sur des lignes de mesure (12, 13) venant du capteur (11) et de signaux de données sur des lignes de données (12, 15) venant du support de données (10) au moyen d'une fiche (14) à un appareil d'analyse (19), le support de données (10) étant disposé à l'extérieur du capteur (11) dans la fiche (14) dans la liaison (16), qui est reliée de façon fixe au capteur (11), **caractérisé en ce que** la liaison (16) entre le capteur (11) et la fiche (14) est un câble coaxial et entre la fiche (14) et l'appareil d'analyse (19) un câble triaxial, les lignes de mesure (12, 13) venant du capteur (11) et les lignes de données (12, 15) venant du support de données (10) ayant un conducteur de masse (12) commun.

2. Capteur selon la revendication 1, sur lequel le câble (17, 4) triaxial est un conducteur (13, 41) et deux blindages (15, 43, 12, 45) et des isolations (42, 44) sont présentes entre le conducteur (13, 41) et les blindages (15, 43, 12, 45).

3. Capteur selon l'une quelconque des revendications 1 ou 2, sur lequel le diamètre maximum de la fiche (14) et du câble coaxial (16) est au maximum égal ou inférieur au diamètre du boîtier de capteur (11) dans sa zone de montage.

4. Capteur selon les revendications 1 à 3, sur lequel le diamètre du boîtier de capteur (11) dans sa zone de montage est d'au maximum 10 mm, de préférence au maximum 5 mm ou 6 mm.

5. Capteur selon l'une quelconque des revendications 1 à 4, **caractérisé en ce que** le capteur est un capteur de pression, un capteur de force, un capteur d'accélération ou un capteur de température.

6. Capteur selon l'une quelconque des revendications 1 à 5, sur lequel des données spécifiques du capteur correspondant (11) telles que le fabricant, la plage de mesure, et/ou la date d'étalonnage sont stockées dans le support de données (10) de façon à pouvoir être appelées.

7. Moteur à combustion avec capteur (11) selon l'une quelconque des revendications 1 à 5 pour déterminer des pressions du cylindre.

8. Moteur à combustion, turbine à gaz, turbine à vapeur, machine de moulage par injection, outil de moulage par injection, machine extrusion, machine de découpage ou paroi de collision comprenant un capteur (11) pour la mesure de force, de pressions ou d'accélérations selon l'une quelconque des revendications 1 à 5.
